# EUROPÄISCHE PATENTANMELDUNG

(11) **EP 1 453 174 A1**
(43) Veröffentlichungstag der Anmeldung: **01.09.2004**
(21) Anmeldenummer: 03004232.9
(22) Anmeldetag: 25.02.2003
(51) Int. Cl.: H02H 11/00

(54) **Verfahren und Vorrichtung zur Erkennung von Kurzschlüssen auf Speiseabzweigen eines elektrischen Netzes zur Versorgung von Eisenbahnstrecken**

(71) Anmelder: Va Tech Sat GmbH & Co, 1210 Wien (AT)
(72) Erfinder: Stollberg, Andreas, 99880 Oberdorla (DE)
(74) Vertreter: Grünecker, Kinkeldey, Stockmair & Schwanhäusser Anwaltssozietät

(57) **Zusammenfassung**

Verfahren und Vorrichtung zur Erkennung von Kurzschlüssen in Speiseabzweigen eines elektrischen Netzes zur Versorgung von Eisenbahnstrecken, bei denen nach einem in einem Speiseabzweig aufgetretenen Überstrom der Speiseabzweig vom Versorgungsnetz getrennt wird und anschließend kurzzeitig mit Spannung beaufschlagt wird, um über den Stromverlauf über die Zeit festzustellen, ob auf dem Speiseabzweig ein noch vorhandener "dauerhafter Kurzschluss" vorliegt, der die Wiederinbetriebnahme nicht zulässt, mit der Besonderheit, dass der Speiseabzweig über einen Halbleiterschalter mit dem Versorgungsnetz verbunden wird, und dass der sich in dem Speiseabzweig aufbauende Strom gemessen wird und der Messwert einem Schwellwertschalter zugeführt wird, der den Halbleiterschalter bei Erreichen eines vorgegebenen Schwellwerts öffnet, wobei der vorgegebene Schwellwert so gewählt ist, dass er nur bei einem "dauerhaften Kurzschluss" überschritten wird.

## Beschreibung

Die vorliegende Erfindung bezieht sich auf ein Verfahren und eine Vorrichtung zur Erkennung von Kurzschlüssen auf Speiseabzweigen eines elektrischen Netzes zur Versorgung von Eisenbahnstrecken.

Elektrifizierte Eisenbahnstrecken sind in einzelne Speiseabschnitte unterteilt, die jeweils auf einen etwa auftretenden Kurzschluss an den Einspeisestellen (sogenannten Leitungsabzweigen oder Streckenabgängen oder Speiseabzweigen) überwacht werden. Im Kurzschlussfall wird der Speiseabzweig abgeschaltet und anschließend daraufhin überprüft, ob es sich um einen dauerhaften Kurzschluss handelt, oder ob es nur ein sogenannter "Kurzschlusswischer" war. Kurzschlusswischer entstehen beispielsweise durch Überschläge infolge Unterschreitung des Sicherheitsabstandes zu spannungsführenden Teilen, Überschläge an den Isolatoren bei Nebel, Gewitter, durch Vögel, in die Oberleitung gewehte Äste, Planen und sonstige Fremdkörper, schadhafter oder stark verschmutzter Isolatoren und defekte Stromabnehmer von elektrischen Triebfahrzeugen. Derartige Kurzschlusswischer sind einmalige Ereignisse, die durch Abbrand quasi "selbstheilend" sind und es erlauben, den vollen Netzbetrieb wiederaufzunehmen. Dauerkurzschlüsse entstehen beispielsweise, wenn gerissene, spannungsführende Teile der Oberleitung auf Fahrzeugen, Schienen oder erdbodenfest aufliegen, leitende Gegenstände Isolatoren überbrücken, elektrische Triebfahrzeuge mit schadhafter Hochspannungsdachausrüstung liegen bleiben oder dauerhafte, niederohmige Erdverbindungen zur Oberleitung geschaffen worden sind.

Um diese beiden Arten von Oberleitungskurzschlüssen zu unterscheiden, ist in den Bahnstromschaltanlagen jeweils eine Prüfzelle, eine separate 15-kV-Prüfschiene und eine Oberleitungsprüfautomatik (OLPA) installiert.

Durch die Schutzauslösung des 15-kV-Leistungsschalters wird die OLPA angeregt und beginnt mit der Durchführung ihres Prüfprogramms.

Bei den älteren Schaltanlagen sowie in einigen Regionen auch bei Neubau üblich erfolgt die Anspeisung der Prüfschiene von der 15-kV-Betriebsschiene über den sogenannten Werkumspanner, der 230-Volt-Eigenbedarfschiene, dem Niederspannungsprüfwiderstand und dem Prüfumspanner. Der Prüfumspanner ist nicht ständig in Betrieb; nur zu Prüfzwecken schaltet hier die OLPA vorher zusätzlich den Niederspannungs-Leistungsschalter des Prüfumspanners ein, und nach erfolgter Prüfung wieder aus. Bei den neueren Normschaltanlagen werden die Prüfschienen ständig durch einen Hochspannungs-Prüfwiderstand mit 3,3 kOhm von der 15-kV-Betriebsschiene aus unter Spannung gesetzt.

Alle elektrischen Triebfahrzeuge, die sich gerade in einem Oberleitungsspeiseabzweig befinden, welcher durch Kurzschluss- oder Überlastauslösung des Oberleitungs-Leistungsschalters spannungslos geworden ist, erhalten automatisch eine Ausschaltung des Lokhauptschalters durch ein im Fahrzeug eingebautes Unterspannungsrelais. Ebenso müssen alle leistungsstarken elektrischen Nebenverbraucher, die an der Oberleitung angeschlossen sind und von dort mit Energie versorgt werden, wie z.B. Weichenheizungen und Vorheizanlagen für Reisezüge, eine Abwurfund Zuschaltautomatik besitzen, welche beim Rückgang der Oberleitungsspannung die Anlagen abschaltet und erst ca. 3 bis 5 Minuten nach Wiederkehr der Spannung zuschaltet. Diese Vorkehrungen sind erforderlich, damit die Stromaufnahme der Nebenverbraucher das Prüfergebnis der Oberleitungsstreckenprüfung nicht unzulässig beeinträchtigt oder verfälscht.

Die OPLA schaltet bei einem ausgelösten Speiseabzweig selbsttätig den jeweiligen Motor- oder druckluftbetätigten Prüftrenner nach einer kurzen Vorlaufzeit von ein Paar Sekunden ein. Somit wird der gesamte Oberleitungsabschnitt mit sämtlichen Speisekabeln und -leitungen sowie bei den auf der Strecke befindlichen elektrischen Triebfahrzeugen einschließlich des gehobenen Stromabnehmers und der Oberspannungsdachausrüstung mit 15-kV-Prüfspannung über eine Prüfdauer von etwa 2 Sekunden beaufschlagt.

Bei "gutem" Prüfergebnis (Entscheidungskriterium ist hierfür die Prüfspannungsauswertung) fließt nur ein geringer Ableitprüfstrom, welcher seinerseits auch einen geringen Spannungsfall am Hochspannungs- (bzw. im Übersetzungsverhältnis des Prüfumspanners - am Niederspannungs)-Prüfwiderstand zur Folge hat, wird durch die OPLA der Prüftrenner ausgeschaltet und anschließend der Abzweig-Leistungsschalter wieder in Betrieb genommen.

Bei "schlechtem Prüfergebnis" fließt durch die noch unzulässigerweise bestehende Erdverbindung ein erhöhter Prüfstrom, welcher aber durch den Prüfwiderstand auf maximal 5 A begrenzt wird. Bei einem Prüfwiderstand von 3,3 kOhm und einer Spannung von 15 kV entsteht unter Umständen eine Verlustleistung von etwa 50 MWatt, die über die Prüfzeit von 2 Sekunden eine Energie von etwa 14 kWh im Prüfwiderstand umsetzt. Dementsprechend ist ein derartiger Prüfwiderstand sehr voluminös und aufwendig. Aus diesem Grund wird der Prüfwiderstand nur einmal zentral in einer Schaltanlage für alle Speiseabzweige ausgeführt. Die Prüfzelle ist gegen Kurzschluss und Überhitzung aufwendig zu schützen. Lösen mehrere Speiseabzweige gleichzeitig aus, kann nur nacheinander die Prüfung und Wiederversorgung erfolgen. Auch die in diesem Stand der Technik verwendeten Schalter zum Einund Abschalten der Prüfspannung in den Speiseabzweigen sind mechanische Lasttrennschalter und aufwendig angetrieben.

Aus der Literatur sind bereits folgende Vorschläge bekannt, Kurzschlüsse auf Speiseabzweigen zu erkennen.

DE 199 30 122 benutzt Halbleiterschalter zum Aufschalten des Leitungsabzweigs mit einem Prüfwiderstand, der deutlich größer ist, als der Leitungswiderstand des Speiseabzweigs. Damit werden zwar die mechanischen Schalter ersetzt, aber es werden immer noch aufwendige und voluminöse Prüfwiderstände eingesetzt.

Aus EP 0 555 946 B1 ist bekannt, anstelle des Prüfwiderstandes über einen Transformator einen ohmsch-kapazitiven Widerstand anzuschalten. Nachteilig an dieser Ausführung ist der hohe technische Aufwand sowie die Nichtbeherrschung der Energiependelung zwischen dem kapazitiven Widerstand und den im Speiseabzweig verbleibenden entlasteten Weichenheizungstransformatoren.

Eine interessante Lösung zeigt die EP 0 563 695. Sie schlägt vor, die Netzspannung im Scheitelpunkt der Spannung mit einer vorgegebenen Dauer von etwa 0.5 msec auf den Speiseabzweig zu legen und in dieser Zeitspanne den sich aufbauenden Strom und/oder die Spannung zu betrachten, um Auskunft über einen etwaigen "dauerhaften Kurzschluss" zu erhalten. Ein Strombegrenzungswiderstand ist bei dieser Lösung nicht vorgesehen. Als Schalter sind Halbleiterschalter vorgeschlagen. In der Anwendung auf Schienenstrecken der Bahn wäre dieses Verfahren zwar gegenüber der derzeitig noch verwendeten Technologie vorteilhaft, weil die Schalter vereinfacht wären, aber es stellt sich immer noch das Problem, die im Halbleiterschalter entstehende Verlustleistung abzubauen. Bei einer Betriebsspannung von 15 kV erreicht der sich aufbauende Strom bei den vorhandenen Impedanzwerten des Transformators und den Impedanzwerten eines fehlerbehafteten Leitungsabzweigs bei einem Prüfimpuls von 0.5 msec Werte von 1 kA. Der Halbleiterschalter muss deshalb dementsprechend ausgebildet sein, um diesen Strom und die daraus resultierende Abschaltleistung aufnehmen und den derart hoch aufgebauten Strom sicher abschalten zu können.

Bei der Anwendung dieses Verfahrens auf Eisenbahnstrecken könnte man zwar daran denken, die Impulsdauer zu verringern, um die Höhe der Abschaltleistung zu vermindern.

Dies bringt allerdings ein anderes Problem mit sich.

Vorgeschädigte Betriebsmittel, welche keinen sofortigen Stromanstieg nach Wiedereinschaltung bewirken, sondern erst nach aufgebauter Spannung erneut zünden, werden mit einem kurzen Prüfimpuls nicht erfasst. Weiterhin verhält sich die Kapazität des kurzschlussfreien Speiseabzweigs im Einschaltmoment (Ladestrom) wie ein Kurzschluss und ist somit bei kurzer Impulsdauer nicht zu unterscheiden.

Die Stromanstiegsgeschwindigkeit zu Beginn einer Prüfschaltung auf einen Kurzschluss wird wesentlich bestimmt durch die induktive Komponente im Speiseabzweig, einschließlich des/der Speisetransformators/en. Da die induktive Komponente bei unterschiedlicher Fehlerortentfernung differiert, müsste die Impulszeit auf die jeweilige induktive Komponente abgestimmt sein. Außerdem erfordert das obige Verfahren ein definiertes Einschalten, beispielsweise im Scheitelpunkt der Versorgungsspannung.

Die vorliegende Erfindung geht deshalb von einem anderen Ansatz aus.

Der Stand der Technik bietet heute Halbleiterbauelemente vom Typ MOS-FET (metal- oxide- semiconductor field effect transistor) oder IGBT (Isolated Gate Bipolar Transistor) oder GCT (Gate-Communicated Thyristor), die für den vorliegenden Anwendungsfall ausreichende Abschaltleistung bei schneller Schaltzeit von wenigen Mikrosekunden garantieren. Die nötige Spannungsfestigkeit von etwa 125 kV für diese Anwendung wird durch Reihenschaltung erreicht. Das Wechselspannungsschaltvermögen ist mittels antiserieller Anordnung und durch Verwendung von Freilaufdioden realisiert.

Mit einem derartigen Halbleiterschalter wird deshalb die Möglichkeit geschaffen, den Testlauf ohne einen strombegrenzenden Vorwiderstand durchzuführen, wenn man, wie erfindungsgemäß vorgesehen, den Halbleiterschalter so steuert, dass er bei Erreichen einer vorgegebenen Stromstärke von beispielsweise 20 A wieder hinreichend schnell abschaltet. Dabei wird davon ausgegangen, dass diese Stromstärke im Nicht-Kurzschlussfall des Speiseabzweiges nicht erreicht wird. Die Strombegrenzung auf etwa 20 A ist auch hoch genug, um etwa auftretende Einschaltausgleichsvorgänge, Ableitungen, den kapazitiven Belag des entlasteten Netzes sowie kleinere nicht entlastete Verbraucher zu treiben Nur im Kurzschlussfall erreicht der Strom Werte, die den oben angenommenen Schwellwert von 20 A überschreiten. Die kapazitive Komponente eines zu prüfenden Netzes führt zu kapazitiven Anschaltströmen von etwa 0,5 A. Dieser Wert kann als Funktionsnachweis des Prüfschalters herangezogen werden. Bei Nichterreichung dieses Wertes erfolgt Abbruch und Störmeldungsausgabe.

Im Kurzschlussfall wird der Anstieg des Stromes durch die induktiven Anteile der Stromschleife begrenzt. Der Halbleiterschalter muss so. gewählt werden, dass der Ausschaltvorgang schneller erfolgt, als ein weiterer Stromanstieg ein sicheres Ausschalten verhindern würde. Auf diese Art kann der Halbleiterschalter wirtschaftlich realisiert werden.

Es wird der Schwellwert in der Praxis bei üblichen Leistungsabzweigen bereits nach etwa 10 mikrosec erreicht, wenn zu Phasenlagen in der Nähe des Scheitelpunkts der Netzspannung eingeschaltet wird. Näherungsweise wird davon ausgegangen , dass bei üblichen Speiseabzweigen der Kurzschlussstrom bei einer Spannung von 15 kV in 20 msec einen Wert von bis zu 40 kA erreichen kann. Auch wenn man in der Nähe des Nulldurchganges der Versorgungsspannung einschaltet, erreicht man bereits nach wenigen msec Spannungswerte , die im Kurzschlussfall den angenommenen Stromgrenzwert treiben. Der oben angesprochene Stromschwellwert von 20 A liegt demnach bei etwa 1/1000 des Kurzschlussstromes und bei etwa 1/100 des Nennstromes.

Die dem Gegenstand der Erfindung zugrundeliegende Idee besteht darin, ohne Schutzwiderstand die volle Versorgungsspannung an den Speiseabzweig zu legen und im Fall eines Kurzschlusses die Betriebsmittel und Anlagenteile dadurch vor Überlast zu schützen, dass der Halbleiterschalter bei Erreichen eines vorgegebenen niedrigen Grenzwertes für den Prüfstrom automatisch schnell ausgeschaltet wird. Erreicht der Strom während der gesamten Prüfperiode nicht den Grenzwert, kann davon ausgegangen werden, dass kein Kurzschluss vorliegt. Die Prüfung kann durchaus auf einen Zeitbereich von 1 bis 2 sec ausgedehnt werden. Auch vorgeschädigte Betriebsmittel werden so vom Prüfvorgang sicher als Fehler erkannt. Dieses Verfahren kann mit einem Halbleiterschalter durchgeführt werden, welcher nur etwa den einhundertsten Teil des Betriebsstromausschaltvermögens und nur etwa den eintausendsten Teil des Kurzschlussausschaltvermögens des Hauptstrompfades besitzt. Ein derart ausgeführter Halbleiterschalter kann zentral pro Schaltanlage sowie dezentral pro Speiseabzweig angeordnet werden.

Anhand der in der Zeichnung dargestellten Schaltung wird die Erfindung näher erläutert. Es zeigen:
- FIG. 1: das Prinzipschaltbild, nach dem die vorliegende Erfindung in zentraler Anordnung arbeitet;
- FIG. 2: das Prinzipschaltbild, nach dem die vorliegende Erfindung in dezentraler Anordnung arbeitet, und
- FIG. 3: den Aufbau des Halbleiterschalters.

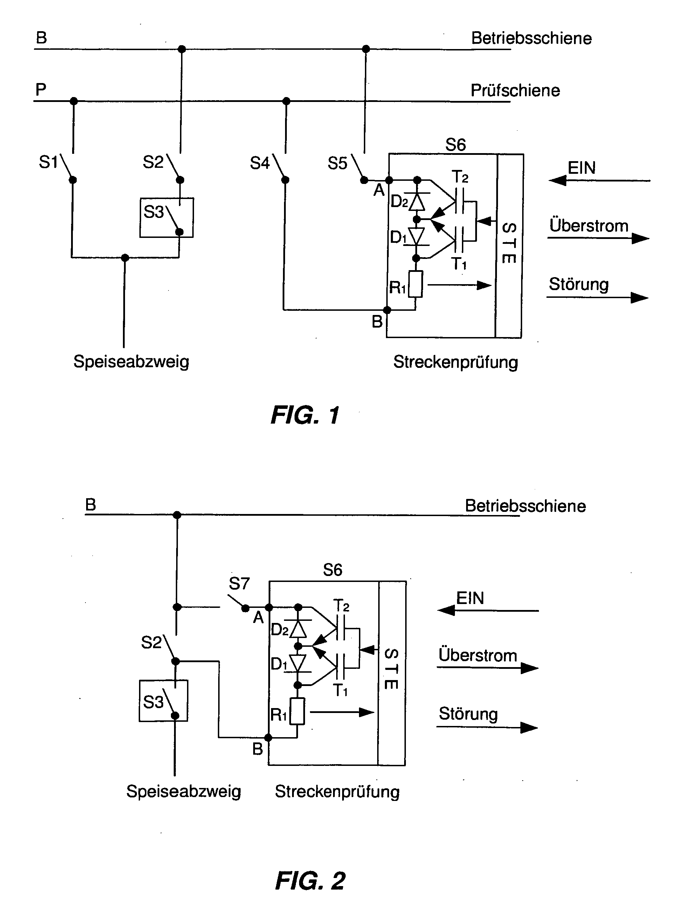

Fig. 1 zeigt eine Betriebsschiene B und eine Prüfschiene P. Auf der Betriebsschiene B liegt üblicherweise eine Netzspannung von 15 kV mit einer Frequenz von 16,7 Hz. Im Normalbetrieb ist der Speiseabzweig über die Schalter S2 und S3 mit der Betriebsschiene B verbunden. Über eine nicht dargestellte Schutzeinrichtung wird der Leistungsschalter im Kurzschluss- oder Überlastfall ausgelöst, so dass der Speiseabzweig spannungslos wird.

Parallel zur Betriebsschiene B liegt eine Prüfschiene P, auf die die Betriebsspannung zum Testen auf Kurzschluss über die Schalter S4 und S5 und den Halbleiterschalter T1, T2sowie über den Shunt R1 aufgeschaltet werden kann. Der Halbleiterschalter ist im vorliegenden Fall mit zwei antiseriell geschalteten Transistoren T1 und T2 aufgebaut, denen jeweils eine Freilaufdiode D1 bzw. D2 parallel geschaltet ist und der von einer Steuereinheit STE ansteuerbar ist. In dieser Figur nicht dargestellt ist die zur Erreichung der Spannungsfestigkeit notwendige Serienschalung mehrerer Elemente bestehend aus T1, T2, D1 und D2. Die Steuereinheit STE enthält entsprechende Treiberschaltungen zum Ein- und Ausschalten der Halbleiterschaltelemente. Außerdem ist in der Steuereinheit STE ein Spannungsschwellwert von beispielsweise 2V ausgeführt, der in der STE mit einem ihr zugeführten Spannungsabfall über dem Shunt R1 verglichen wird.

Die Schalter S2, S4, S5 sind im Normalbetrieb und während des gesamten Testlaufs geschlossen.

Eine Voraussetzung zum Start des Testlaufs ist der ausgeschaltete Leistungsschalter S3. Zum Betätigen des Testlaufes wird zunächst der Trenner S1geschlossen, um den Speiseabzweig mit der Prüfschiene zu verbinden. Der Halbleiterschalter T1, T2 ist noch ausgeschaltet. Durch ein der Steuereinheit STE zugeführtes Einschaltsignal "EIN" wird die in der Steuereinheit enthaltene Treiberschaltung aktiviert, die den Halbleiterschalter S6 (T1, T2) schlagartig schließt. Der in die Prüfschiene fließende Prüfstrom wird über dem Shunt R1 als proportionaler Spannungsabfall abgegriffen und der Steuereinheit STE zugeführt, die den Absolutwert des Spannungsabfalls mit einem eingestellten Spannungsschwellwert vergleicht und den Halbleiterschalter sehr schnell wieder öffnet, wenn der Spannungsschwellwert überschritten wird. In diesem Fall ist das Prüfergebnis negativ. Der Trenner S1 wird geöffnet. Der betroffene Speiseabzweig bleibt spannungslos, die Streckenprüfung steht für andere Speiseabzweige wieder zur Verfügung.

Bei den in üblichen Speiseabzweigen enthaltenen Induktivitäten baut sich bei einem satten und nicht durch Schnellabschaltung unterbrochenen Kurzschluss, insbesondere wenn er generatornah liegt, ein Kurzschlussstrom mit einer Anstiegszeit von etwa 2 kA/msec auf. Ohne Kurzschluss entstehen bei den üblicherweise abgeworfenen Lasten, wie Triebfahrzeugen und Weichenheizungen keine nennenswerten Ströme. Bei diesem Stromanstieg wird bei einem Kurzschluss der Stromgrenzwert von 20 A in einer Zeitspanne von etwa 10 mikrosec erreicht.

Um den in die Prüfschiene P gehenden Strom zu messen, kann wie dargestellt ein Widerstand R1 im Halbleiterschalter S6 in den Hauptstrompfadeingefügt sein, der sehr niederohmig ist, beispielsweise 0,1 Ohm, und an dem bei dem angenommenen Stromschwellwert von 20 A maximal eine Spannung von 2 Volt abfällt.

Wird bis zum Ende der Prüfperiode kein Überstrom erkannt, ist das Prüfergebnis positiv. Es wird dann der Halbleiterschalter ausgeschaltet und nachfolgend der Trenner S1 geöffnet. Durch Zuschaltung des Leistungsschalters S3 ist der Normalschaltzustand zur Wiederversorgung des Streckenabzweiges erreicht.

Fig. 2 zeigt die Möglichkeit der dezentralen Anordnung. Es wird in jedem Speiseabzweig ein Halbleiterschalter S6 vorgesehen. Im Vergleich zur zentralen Anordnung kann die gesamte Prüfschienenanordnung und das Streckenprüfschaltfeld entfallen. Die gleichzeitige Prüfung mehrerer Abzweige verkürzt so die Versorgungsunterbrechungszeiten wesentlich.

Im Normalbetrieb sind die Schalter S2, S3 und S7 geschlossen und der Halbleiterschalter S6 ist geöffnet. Nach Auslösen des Leistungsschalters S3 und vorliegenden Prüfautomatikstartbedingungen wird im ersten Schritt der Trenner S2 geöffnet und der Leistungsschalter S3 eingeschaltet.

Durch ein der Steuereinheit STE zugeführtes Einschaltsignal "EIN" wird die in der Steuereinheit enthaltene Treiberschaltung aktiviert, die den Halbleiterschalter S6 (T1, T2) schlagartig schließt. Der in die Prüfschiene fließende Prüfstrom wird über dem Shunt R1 als proportionaler Spannungsabfall abgegriffen und der Steuereinheit STE zugeführt, die den Absolutwert des Spannungsabfalls mit einem eingestellten Spannungsschwellwert vergleicht und den Halbleiterschalter sehr schnell wieder öffnet, wenn der Spannungsschwellwert überschritten wird. In diesem Fall ist das Prüfergebnis negativ. Der Trenner S7 wird geöffnet. Der betroffene Speiseabzweig bleibt spannungslos.

Wird bis zum Ende der Prüfperiode kein Überstrom erkannt, ist das Prüfergebnis positiv. Es wird dann der Halbleiterschalter und der Leistungsschalter ausgeschaltet, anschließend der Trenner S2 geschlossen. Durch Zuschaltung des Leistungsschalters S3 ist der Normalschaltzustand zur Wiederversorgung des Streckenabzweiges erreicht.

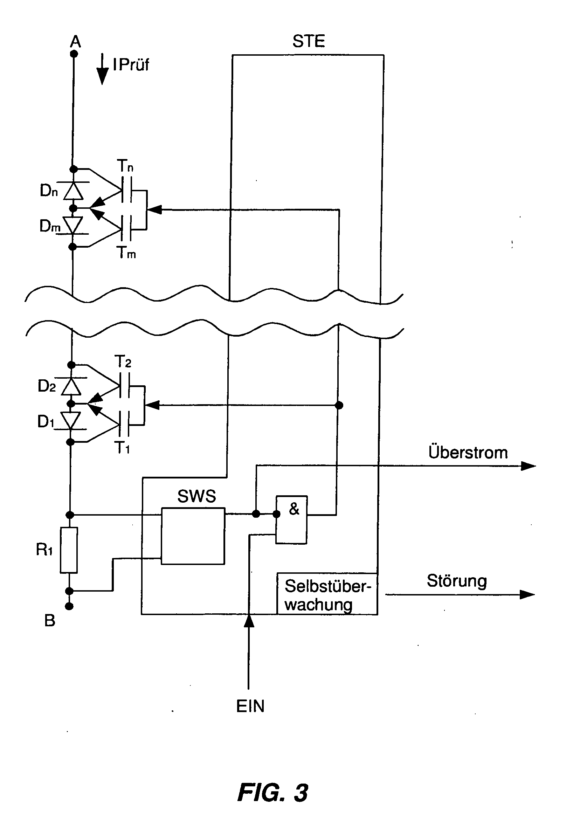

Fig. 3 zeigt den prinzipiellen Aufbau des Halbleiterschalters mit zugehöriger Steuereinheit. An den Anschlusspunkten A und B wird der zu schaltende Prüfstrompfad angelegt. Der Steuereingang "EIN" ermöglicht das definierte gleichzeitige Ein- und Ausschalten der antiseriell geschalteten Halbleiterelemente T1,T2......Tm und Tn. Der Ausgang "Überstrom" meldet das Überschreiten der eingeprägten Prüfstromschwelle.

Der Ausgang "Störung" signalisiert die Nichtverfügbarkeit des Halbleiterschalters. Durch Abbruch ist dargestellt, dass weitere seriell geschaltete Bauelemente zur Spannungsfestigkeitserhöhung nötig sind.

Am Shunt R1 wird ein dem Prüfstrom proportionale Spannung abgegriffen und dem Schwellwertschalter SWS zugeführt. Der Schwellwertschalter prüft nahezu verzögerungslos den Absolutwert des Spannungsabfalls am Shunt gegen die eingeprägte Referenzschwelle. Wird diese überschritten, müssen in Schnellzeit über die Steuereinheit alle Halbleiterschaltelemente gleichzeitig abgesteuert werden. Unter dieser Voraussetzung kann erfindungsgemäß der Prüfschalter für eine Ausschaltleistung ausgelegt werden, die um etwa zwei Zehnerpotenzen unter der benötigten Betriebsschaltleistung und um drei Zehnerpotenzen unter der Kurzschlussausschaltleistung liegt.

Eine nicht im Einzelnen dargestellte Selbstüberwachung überprüft alle funktionswichtigen Größen der Anordnung.

Jeweils ein Halbleiterschaltelement der antiseriell angeordneten Kette übernimmt die Schaltfunktion einer Halbwelle des Prüfstromes. Das jeweils andere Halbleiterschaltelement ist zu dieser Zeit über die parallel geschaltete Diode vor Rückspannung geschützt.

Die nötige Hilfsspannungsversorgung der einzelnen Schaltungsteile wird aus der sich aufbauenden Messspannung abgeleitet und zur Überbrückung der Einschaltperiode in geeigneten Kondensatoren gepuffert (nicht dargestellt).

## Patentansprüche

1. Verfahren zur Erkennung von Kurzschlüssen in Speiseabzweigen eines elektrischen Netzes zur Versorgung von Eisenbahnstrecken, bei dem nach einem in einem Speiseabzweig aufgetretenen Überstrom der Speiseabzweig vom Versorgungsnetz getrennt wird und anschließend kurzzeitig mit Spannung beaufschlagt wird, um über den Stromverlauf über die Zeit festzustellen, ob auf dem Speiseabzweig ein noch vorhandener "dauerhafter Kurzschluss" vorliegt, der die Wiederinbetriebnahme nicht zulässt, **dadurch gekennzeichnet, dass** der Speiseabzweig über einen Halbleiterschalter (T1 - Tn, D1 - Dn) mit dem Versorgungsnetz verbunden wird, und dass der sich in dem Speiseabzweig aufbauende Strom gemessen wird und der Messwert einem Schwellwertschalter (SWS) zugeführt wird, der den Halbleiterschalter bei Erreichen eines vorgegebenen Schwellwerts öffnet, wobei der vorgegebene Schwellwert so gewählt ist, dass er nur bei einem "dauerhaften Kurzschluss" überschritten wird.

2. Verfahren nach Anspruch 1, **dadurch gekennzeichnet, dass** der Wert des Stroms beim Stromanstieg indirekt über eine Spannungsmessung an einem im Stromkreis liegenden niederohmigen Widerstand (R1) erfolgt.

3. Verfahren nach Anspruch 1, **dadurch gekennzeichnet, dass** dem Schwellwertschalter (SWS) die Spannung an der Kollektor-Emitterstrecke des Halbleiterschalters (T1 - Tn, D1 - Dn) zugeführt wird und der Schwellwertschalter den Haltleiterschalter öffnet, wenn die Spannung nicht in weniger als 10 mikrosec unter einen vorgegebenen Schwellwert absinkt.

4. Verfahren nach einem der Ansprüche 1 bis 3, **dadurch gekennzeichnet, dass** bei einer Versorgungsspannung von 15 kV ein Stromschwellwert von 20 A benutzt wird, um den Halbleiterschalter (T1 - Tn, D1 - Dn) zu öffnen.

5. Verfahren nach einem der Ansprüche 1 bis 4, **dadurch gekennzeichnet, dass** der Halbleiterschalter vom Typ MOS-FET, oder IGBT oder ICT ist.

6. Vorrichtung zur Durchführung des Verfahrens nach einem der Ansprüche 1 bis 5, **gekennzeichnet durch** einen zwischen das Versorgungsnetz und den Speiseabzweig schaltbaren Halbleiterschalter (T1 - Tn, D1 - Dn), der nach dem Schließen über einen Schwellwertschalter (SWS) wieder geöffnet wird, wobei dem Schwellwertschalter der Wert des sich auf dem Speiseabzweig aufbauenden Stroms bzw. ein diesem Strom entsprechender Spannungswert zugeführt ist.

7. Vorrichtung nach Anspruch 6, **gekennzeichnet durch** zwei antiseriell geschaltete Halbleiterschalter (T1 - Tn, D1 - Dn), denen jeweils eine Diode (D1 - Dn) parallel geschaltet ist.
